# EUROPEAN PATENT SPECIFICATION

(11) **EP 2 361 721 B1**
(45) Date of publication and mention of the grant of the patent: **25.07.2012**
(21) Application number: 11155380.6
(22) Date of filing: 22.02.2011
(51) Int. Cl.: B23P 15/26

(54) **Method and apparatus for assembling of coils for exchangers**
Verfahren und Vorrichtung zur Montage von Schlangen für Wärmetauscher
Procédé et dispositif pour assembler des serpentins pour échangeurs de chaleur

(30) Priority: 26.02.2010 IT MI20100324
(43) Date of publication of application: 31.08.2011
(73) Proprietor: ALFA LAVAL OLMI S.p.A., 24040 Suisio (BG) (IT)
(72) Inventor: Nani, Luciano, 24030 Presezzo (BG) (IT); Cavadini, Walter, 24040 Suisio (BG) (IT); Montagni, Claudio, 20123 Milano (IT)
(74) Representative: Lampis, Marco

(56) References cited:
- JP-A- 8 327 256
- US-A- 3 646 599

## Description

The present invention relates to an innovative method and to an apparatus for assembling coils for exchangers.

Already known from the prior art are heat exchangers formed with a plurality of coils which are each wound in the manner of a cylindrical spiral and which, being made with an increasingly larger diameter, are inserted axially on top of each other so as to form an exchange unit.

Large-size exchangers (for example for chemical plants), which may also have a length greater than ten or so metres and a diameter of more than three metres, may comprise several tens of such helical coils inserted inside one another and suitably connected together. The entire set of coils thus forms a cylindrical structure of exchange tubes which is enclosed inside a pressure container to form the complete exchanger.

A main problem in the manufacture of these exchangers is assembly of the coils. Usually, after producing the single helical coils by means of a suitable spiralling apparatus, the coils are introduced substantially manually inside one another with the aid solely of raising systems. This operation is long, laborious and complex.

A further complication consists in the fact that, in order to maintain the mechanical stability of the coils, the exchanger is provided with radial baffles having holes through which each turn of each coil must pass. During the assembly operations it is easy to cause deformation of the spirals, making it even more difficult or even impossible to insert the spirals into the baffles.

JP 8327256 discloses a method for assembling on an apparatus spiral coils for exchangers.

US 3 646 599 discloses an apparatus and a method for winding coiled tube banks.

The main object of the present invention is to provide a method and an apparatus which are able to facilitate the operations of assembly of the coils for forming the exchange unit.

This object is achieved by the features of the independent claims of the present application. Preferred embodiments are presented in the dependent claims.

In order to illustrate more clearly the innovative principles of the present invention and its advantages compared to the prior art, an example of embodiment applying these principles will be described below, with the aid of the accompanying drawings. In the drawings:
- Figure 1 shows a schematic perspective view of an apparatus provided according to the invention;
- Figure 2 shows a side elevation view of the apparatus according to Figure 1 during insertion of a coil;
- Figure 3 shows a plan view of the apparatus according to Figure 1 during insertion of a coil;
- Figure 4 shows a view from one end of the apparatus according to Figure 1;
- Figure 5 shows a schematic view from one end of the assembly zone with an exchange unit nearly completed;
- Figure 6 shows a schematic and partial view of an exchanger unit assembled with the apparatus according to Figure 1.

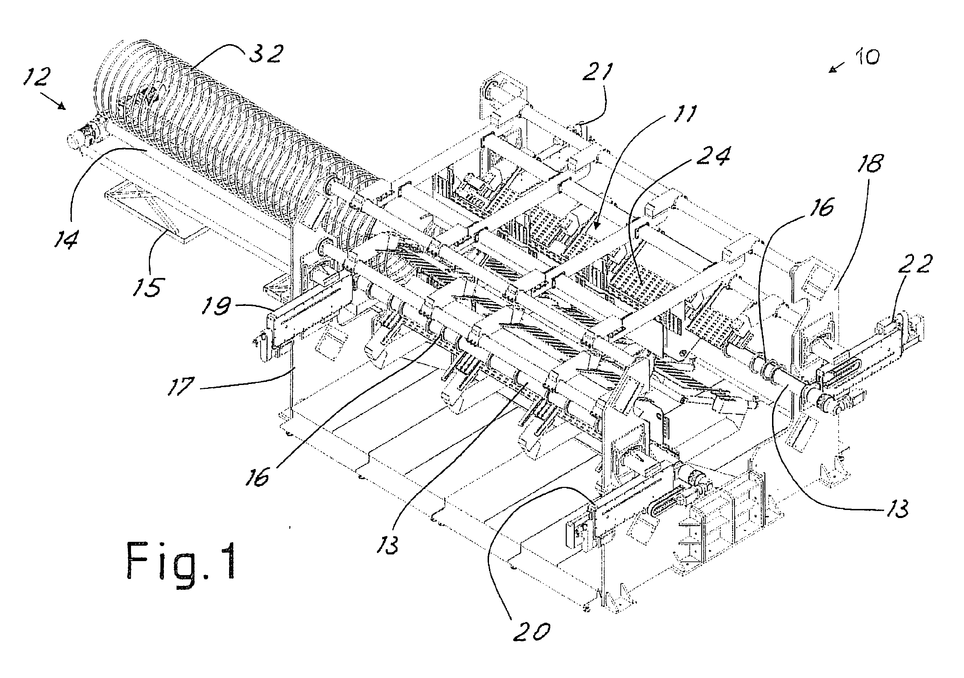

With reference to the figures, Figure 1 shows an apparatus - denoted generally by 10 - designed according to the invention for the assembly of exchange units formed by cylindrical-spiral coils 32 arranged concentrically. These exchange units are of the known type, suitable for forming corresponding known fluid-type heat exchangers, for example for chemical plants. Advantageously, the apparatus operates with the coils arranged with their axis in the horizontal position.

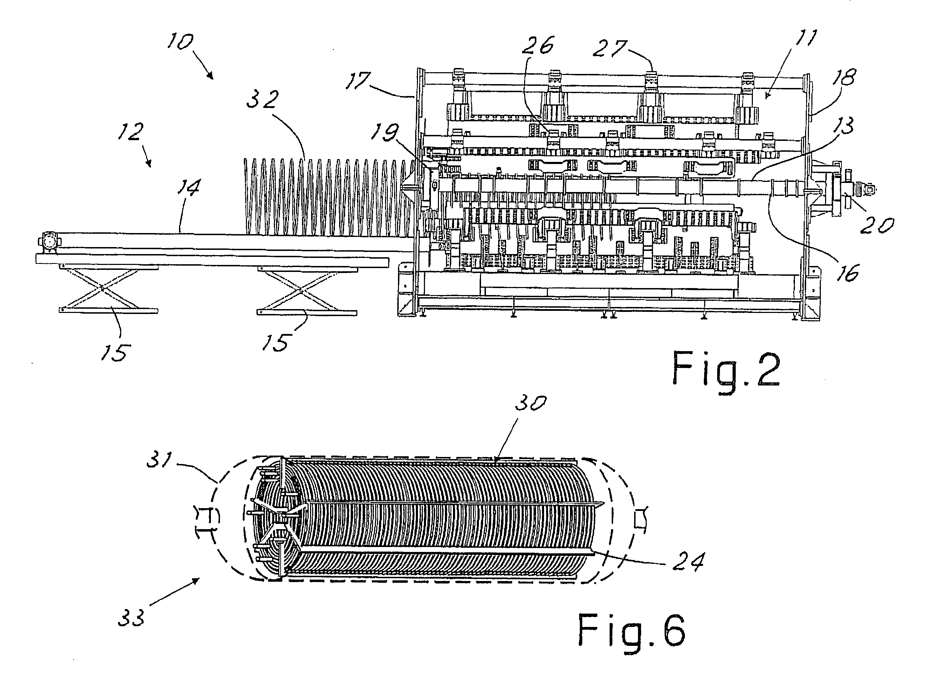

The apparatus 10 comprises a support zone 11 which is intended to receive the spiral coils arranged concentrically on each other, as will become clear below. An insertion device 12 is intended to insert one at a time the spiral coils towards the support zone 11, while the motorized roller means 13, which are present on the sides and along the support zone 11, cause axial rotation of the spiral coil during insertion thereof into the support zone, so as to obtain a combined screwing movement towards the support zone and above the spiral coils which may have already been inserted into the support zone. As can be clearly seen in Figure 2, the insertion device 12 of the apparatus comprises guides 14 for supporting and sliding of the coil to be inserted and means 15 for moving the guides in the vertical direction so as to move the axis of the coil being inserted towards the axis of the unit being assembled and, in the specific case, towards the axis of the coils which are already present in the support zone. The movement (which may also be inclined) may result in alignment of the axes or, taking advantage of the flexibility of the spirals, stop beforehand.

Advantageously, the sliding guides, comprise two support rollers with a motorized axis of rotation which is parallel to the axis of insertion of the coil so as to support the coil and impart to it an axial rotational movement during insertion.

The movement means 15 are advantageously formed with motorized pantograph raising devices on which the sliding guides or rollers 14 rest.

The support zone 11 is bounded by a frame of the apparatus which supports the motorized rotational roller means on the sides of the support zone.

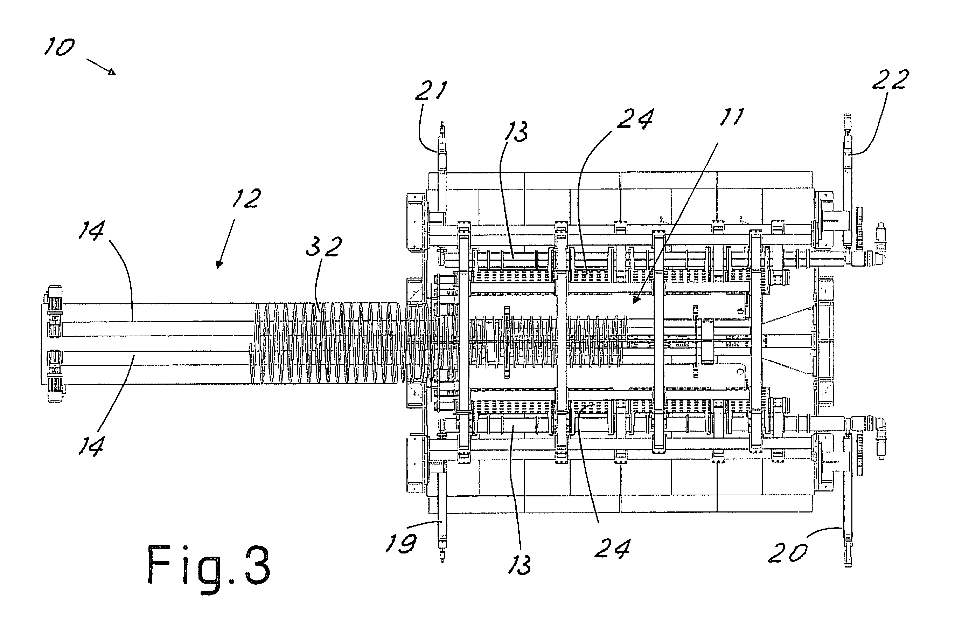

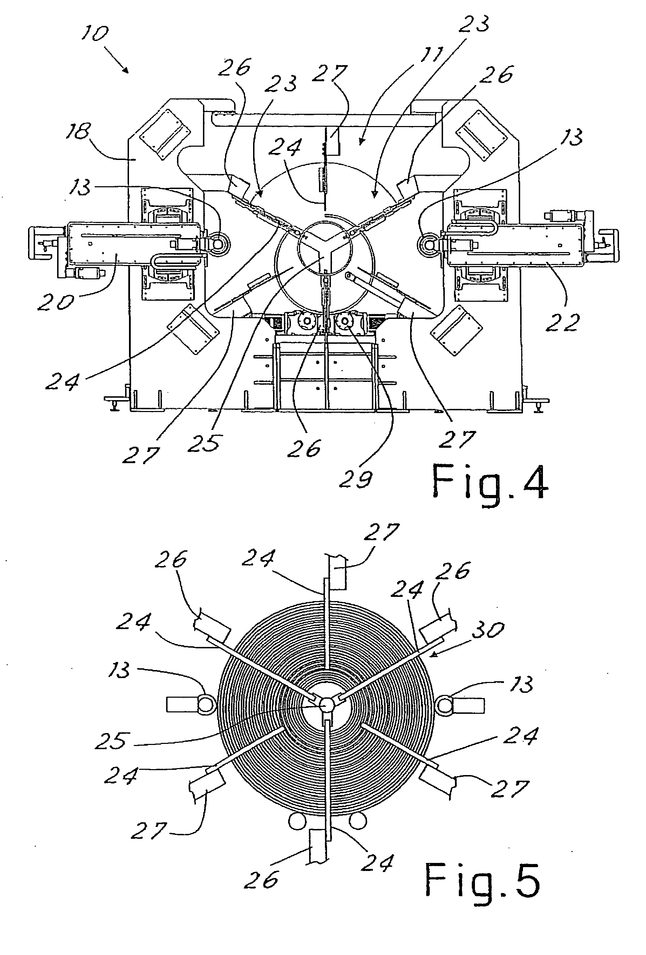

As can be clearly seen also in Figures 3 and 4, these roller means comprise advantageously at least two roller elements 13 arranged facing on two opposite sides of the support zone and with the motorized axis of rotation which is parallel to the axis of the spiral coils in the support zone 11.

The rollers 13 extend advantageously along the entire support zone 11 of the apparatus, which is bounded by facing plate-like end shoulders 17, 18 which are generally U-shaped.

Each roller element 13 performs a controlled transverse approach movement towards the axis of rotation of the coils in the support zone, so as to adapt to the diameter of the specific coil being inserted, resting peripherally against it so as to transmit to it the motorized axial-rotation movement. As can be seen also in Figure 2, the motorized rollers 13 comprise advantageously a plurality of grooved wheels 16 which are spaced along the support zone and which are intended to rest against the turns of the spiral coil so as to guide it during the rotating and advancing movement.

Advantageously, for the transverse movement of the motorized rollers, each motorized roller 13 is supported at the ends by corresponding actuating systems 19, 20 and 21, 22 which perform a controlled synchronized horizontal movement.

The movement of the rollers is advantageously radial to the spiral coil in the support zone.

As can be clearly seen in Figure 4, advantageously the transverse movement of the rollers is performed in a horizontal plane which passes through the axis of rotation of the spirals. This axis also coincides with the axis of the exchange unit which is assembled.

As can be clearly seen also in Figure 4, the support zone is provided with supports for radial baffles 24 with holes, through which the front end of the coil is intended to pass gradually during its rotational insertion movement. The baffles are, for example, screwed to the supports.

The radial baffles have a shape which depends on the structure of the exchanger being assembled, as can be easily imagined by the person skilled in the art.

As can be clearly seen in Figure 1, usually these baffles are formed by radial metal plates of suitable thickness which extend along generatrices of the cylinder of the exchange unit and which are provided with a plurality of holes arranged in the manner of a grid which depends on both the axial and radial pitch which the spirals of the coils in the exchanger must have.

In the embodiment shown, the baffles are six in number, being arranged at angles of 60° around the axis of the exchange unit to be assembled. The number may obviously vary depending on specific constructional requirements of the exchanger.

The supports 23 comprise support arms 26, 27 which project at intervals from beams arranged between the end shoulders 17 and 18 of the apparatus.

Advantageously, the supports for the baffles also comprise central Y-shaped elements 25 which co-operate with at least a first series of peripheral radial arms 26 supporting a first series of three radial baffles arranged at 120°. In this way there is a greater rigidity in the positioning of these baffles and the insertion of the coil by means of axial rotation is facilitated. The central support 25 is intended to be disassembled after complete formation and extraction of the assembled unit.

Advantageously, the supports for the baffles also comprise further peripheral radial arms 27 for a second series of three radial baffles arranged alternating with the first series of baffles in the circumferential direction about the axis of rotation of the coils in the support zone.

Figure 5 shows schematically the support zone 11 of the apparatus with an exchange unit 30 formed by a plurality of spiral coils which have already been passed through the radial baffles.

In order to facilitate the insertion operation, the apparatus may also advantageously comprise motorized vibration devices. These devices (which are substantially known from the prior art and are schematically indicated by 29 in Figure 4) have the function of causing vibration of the coils which are in the support zone and/or being inserted into the support zone by the insertion device 12. The use of a vibration during insertion has been found to be particularly advantageous for reducing the friction and facilitating sliding of the new coil through the holes present in the radial baffles.

During use of the apparatus (once the coils wound with a suitable diameter by means of known spiralling machines from tubes have been prepared) the coils are rested one at a time on the insertion device 12, starting with the smaller-diameter coil and are fed one at a time towards the support zone. During insertion of the coil into the support zone it is rotated axially by motorized means. There is thus a combined "screwing" movement within the support zone and above the spiral coils already introduced into the support zone.

With each change of coil, the rotational rollers are displaced radially so as to adapt to the diameter of the new coil, while the insertion device is displaced so as to align suitably the axis of the new coil with the unit in the support zone.

The front end of each spiral may also be initially guided manually inside the holes of the baffle, during the slow rotation of the spiral.

Advantageously, during insertion, the coils present in the support zone and/or being rotationally inserted into the support zone are made to vibrate.

The procedure is repeated until all the coils have been assembled on one another so as to complete the exchange unit 30. After this, the radial baffles are disconnected from the supports and the entire unit may be extracted from the machine and the following steps for assembly with the remaining parts of the exchanger are started.

Figure 6 shows schematically the exchange unit 30 completed and inserted into the pressure container 31 which enclosed the exchanger unit. Suitable connection pipes for providing an outlet in a direction parallel to the axial direction of the unit are welded to the ends of the coils. These connection elements are in turn welded to the plates (not shown) in suitable inlet zones for the fluid which must pass through the coils. The heat exchanger 33 is thus formed.

The exact structure of the exchanger will obviously depend on the specific requirements and therefore is not shown, it being able to be easily imagined by the person skilled in the art.

At this point it is clear how the predefined objects have been achieved. With the assembly apparatus and method described it is possible to assemble in a rapid and precise manner the coils of an exchanger with superimposed spiral coils.

Obviously, the above description of an embodiment applying the innovative principles of the present invention is provided by way of example of these innovative principles and must therefore not be regarded as limiting the scope of the rights claimed herein. For example the proportions of the various parts and the exact structure of the supports may vary depending on the particular exchanger being assembled, also considering that an assembly apparatus and method according to the invention allow assembly, without difficulty, of exchanger coils which may also be of considerable size and weight, for example also with a length greater than ten or so metres and a diameter of more than three metres.

The vibrating means may also be movable so as to be arranged in different positions depending on the specific needs.

The baffles may also have different dimensions as shown. For example, the intermediate baffles may be shorter and not reach the innermost coils, as shown in Figure 5.

## Claims

1. Apparatus (10) for assembling concentric spiral coils for exchangers, comprising a support zone (11) which is intended to receive the spiral coils (32) arranged concentrically on top of each other, an insertion device (12) which inserts one at a time the spiral coils towards the support zone (11), and motorized roller means (13) for axial peripheral rotation of the spiral coil during insertion thereof into the support zone (11) for a combined screwing movement within the support zone and above the spiral coils already inserted into the support zone.

2. Apparatus according to Claim 1, **characterized in that** the motorized roller means comprise at least two roller elements (13) with a motorized axis of rotation which is parallel to the axis of the spiral coils in the support zone, each roller element (13) having means (19, 20, 21, 22) for performing a controlled approach movement towards the axis of rotation of the coils in the support zone (11) so as to adapt to the diameter of the coil being inserted, resting peripherally against it and transmitting to it the motorized axial-rotation movement.

3. Apparatus according to Claim 2, **characterized in that** the roller elements (13) comprises grooved wheels (16) which are spaced along the support zone and intended to rest against the turns of the spiral coils to be rotated.

4. Apparatus according to Claim 2, **characterized in that** the approach movement of the roller elements (13) is horizontal and radial to the coil in the support zone (11).

5. Apparatus according to Claim 1, **characterized in that** the coils are supported and rotated with their axis horizontal.

6. Apparatus according to Claim 1, **characterized in that** the insertion device (12) comprises guides (14) for supporting and sliding of the coil to be inserted and means (15) for moving the guides in the vertical direction so as to allow the axis of the coil being inserted to be moved towards the axis of the coils in the support zone.

7. Apparatus according to Claim 6, **characterized in that** sliding guides are support rollers (14) with a motorized axis of rotation which is parallel to the axis of insertion of the coil.

8. Apparatus according to Claim 1, **characterized in that** the support zone (11) comprises motorized vibrating devices (29) for causing vibration of the coils (32) present in this zone and/or being inserted into this zone (11).

9. Apparatus according to Claim 1, **characterized in that** the support zone (11) is provided with supports (23, 25, 26, 27) for supporting radial baffles (24) with holes, through which the front end of the coil (32) is intended to pass gradually during its rotational insertion movement

10. Apparatus according to Claim 9, **characterized in that** the supports for the baffles (24) comprise central Y-shaped elements (25) and peripheral radial arms (26) for at least a first series of three radial baffles (24).

11. Apparatus according to Claim 10, **characterized in that** the supports for the baffles (24) also comprise further peripheral radial arms (27) for a second series of three radial baffles arranged alternating with the first series of baffles in the circumferential direction about the axis of rotation of the coils in the support zone.

12. Method for assembling on an apparatus spiral coils (32) for exchangers arranged axially concentrically on top of each other, comprising feeding the coils (32) one at a time towards a support zone (11), starting with the smaller-diameter coil, axially rotating using motorized roller means (13) the coil during insertion thereof into the support zone (11) for a screwing movement over the spiral coils (32) already inserted into the support zone (11) and in which the coils (32) present in the support zone (11) and/or being rotationally inserted into the support zone (11) are made to vibrate using motorized vibrating means (29) during insertion of a coil into the support zone.

13. Method according to Claim 12, in which the coils (32) are supported and fed with their axis horizontal.

## Patentansprüche

1. Vorrichtung (10) zur Montage konzentrischer Spiralschlangen für Wärmetauscher, umfassend eine Tragezone (11), die dazu ausgelegt ist, die Spiralschlangen (32) zu empfangen, die konzentrisch übereinander angeordnet sind, eine Einführvorrichtung (12), die die Spiralschlangen eine nach der anderen in Richtung der Tragezone (11) einführt, sowie eine motorisierte Rolleneinrichtung (13) zur axialen Umfangsrotation der Spiralschlange während der Einführung derselben in die Tragezone (11) zur kombinierten Schraubbewegung innerhalb der Tragezone und oberhalb der bereits in die Tragezone eingeführten Spiralschlangen.

2. Vorrichtung nach Anspruch 1, **dadurch gekennzeichnet, dass** die motorisierte Rolleneinrichtung zumindest zwei Rollenelemente (13) mit einer motorisierten Rotationsachse umfaßt, die zur Achse der Spiralschlangen in der Tragezone parallel ist, wobei jedes Rollenelement (13) eine Einrichtung (19, 20, 21, 22) zum Durchführen einer kontrollierten Annäherungsbewegung in Richtung der Rotationsachse der Schlangen in der Tragezone (11) aufweist, um sich an den Durchmesser der Schlange anzupassen, die gerade eingeführt wird, am Umfang an ihr anzuliegen und die motorisierte Achsenrotationsbewegung an sie zu übertragen.

3. Vorrichtung nach Anspruch 2, **dadurch gekennzeichnet, dass** die Rollenelemente (13) mit Rillen versehene Räder (16) umfassen, die entlang der Tragezone beabstandet und dazu ausgelegt sind, gegen die Wicklungen der zu rotierenden Spiralschlangen anzuliegen.

4. Vorrichtung nach Anspruch 2, **dadurch gekennzeichnet, dass** die Annäherungsbewegung der Rollenelements (13) horizontal und radial zu der Schlange in der Tragezone (11) ist.

5. Vorrichtung nach Anspruch 1, **dadurch gekennzeichnet, dass** die Schlangen mit horizontaler Achse getragen und rotiert werden.

6. Vorrichtung nach Anspruch 1, **dadurch gekennzeichnet, dass** die Einführvorrichtung (12) Führungen (14) zum Tragen und Gleiten der einzuführenden Schlange sowie eine Einrichtung (15) zum Bewegen der Führungen in der vertikalen Richtung umfaßt, um es zu ermöglichen, dass die Achse der Schlange, die gerade eingeführt wird, in Richtung der Achse der Schlangen in der Tragezone bewegt werden kann.

7. Vorrichtung nach Anspruch 6, **dadurch gekennzeichnet, dass** die Gleitführungen Tragerollen (14) mit einer motorisierten Rotationsachse sind, die parallel zur Einführungsachse der Schlange ist.

8. Vorrichtung nach Anspruch 1, **dadurch gekennzeichnet, dass** die Tragezone (11) motorisierte Vibrationsvorrichtungen (29) umfaßt, um eine Vibration der Schlangen (32) zu bewirken, die sich in dieser Zone befinden und/oder gerade in diese Zone (11) eingeführt werden.

9. Vorrichtung nach Anspruch 1, **dadurch gekennzeichnet, dass** die Tragezone (11) mit Stützen (23, 25, 26, 27) zum Tragen radialer Trennplatten (24) mit Löchern versehen ist, durch die das vordere Ende der Schlange (32) während ihrer Rotationseinführungsbewegung allmählich passieren soll.

10. Vorrichtung nach Anspruch 9, **dadurch gekennzeichnet, dass** die Stützen für die Trennplatten (24) zumindest für eine erste Reihe von drei radialen Trennplatten (24) zentrale, Y-förmige Elemente (25) sowie radiale Umfangsarme (26) umfassen.

11. Vorrichtung nach Anspruch 10, **dadurch gekennzeichnet, dass** die Stützen für die Trennplatten (24) darüber hinaus weitere radiale Umfangsarme (27) für eine zweite Reihe von drei radialen Trennplatten aufweisen, die alternierend zur ersten Reihe von Trennplatten in der Umfangsrichtung um die Rotationsachse der Schlangen in der Tragezone angeordnet sind.

12. Verfahren zur Montage von axial konzentrisch übereinander angeordneter Spiralschlangen (32) für Wärmetauscher, umfassend das Zuführen der Schlangen (32) einer nach der anderen in Richtung einer Tragezone (11), beginnend mit der Schlange mit kleinerem Durchmesser, axiales Rotieren der Schlange während ihrer Einführung in die Tragezone (11) unter Verwendung einer motorisierten Rolleneinrichtung (13) zur Schraubbewegung über die bereits in die Tragezone (11) eingeführten Spiralschlangen (32), und wobei die Schlangen (32), die in der Tragezone (11) vorhanden sind und/oder mittels Rotation gerade in die Tragezone (11) eingeführt werden, dazu veranlaßt werden, während der Einführung einer Schlage in die Tragezone unter Verwendung einer motorisierten Vibrationseinrichtung (29) zu vibrieren.

13. Verfahren nach Anspruch 12, wobei die Schlangen (32) mit horizontaler Achse getragen und zugeführt werden.

## Revendications

1. Appareil (10) pour assembler des serpentins en spirale concentriques pour échangeurs de chaleur, comprenant une zone de support (11) qui est prévue pour recevoir les serpentins en spirale (32) agencés de manière concentrique les uns au-dessus des autres, un dispositif d'insertion (12) qui insère un à un les serpentins en spirale vers la zone de support (11), et des moyens à rouleaux motorisés (13) pour la rotation périphérique axiale du serpentin en spirale pendant son insertion dans la zone de support (11) pour un mouvement combiné de vissage à l'intérieur de la zone de support et au-dessus des serpentins en spirale déjà insérés dans la zone de support.

2. Appareil selon la revendication 1, **caractérisé en ce que** les moyens à rouleaux motorisés comprennent au moins deux éléments à rouleaux (13) avec un axe de rotation motorisé qui est parallèle à l'axe des serpentins en spirale dans la zone de support, chaque élément à rouleaux (13) ayant des moyens (19, 20, 21, 22) pour réaliser un mouvement d'approche contrôlé vers l'axe de rotation des serpentins dans la zone de support (11) afin de s'adapter au diamètre du serpentin qui est inséré, reposant de manière périphérique contre ce dernier et transmettant à ce dernier le mouvement de rotation axial motorisé.

3. Appareil selon la revendication 2, **caractérisé en ce que** les éléments à rouleaux (13) comprennent des roues rainurées (16) qui sont espacées le long de la zone de support et prévues pour reposer contre les spires des serpentins en spirale à entraîner en rotation.

4. Appareil selon la revendication 2, **caractérisé en ce que** le mouvement d'approche des éléments à rouleaux (13) est horizontal et radial par rapport au serpentin dans la zone de support (11).

5. Appareil selon la revendication 1, **caractérisé en ce que** les serpentins sont supportés et entraînés en rotation avec leur axe horizontal.

6. Appareil selon la revendication 1, **caractérisé en ce que** le dispositif d'insertion (12) comprend des guides (14) pour supporter et faire coulisser le serpentin à insérer et des moyens (15) pour déplacer les guides dans la direction verticale afin de permettre à l'axe du serpentin qui est inséré d'être déplacé vers l'axe des serpentins dans la zone de support.

7. Appareil selon la revendication 6, **caractérisé en ce que** les guides coulissants sont des rouleaux de support (14) avec un axe de rotation motorisé qui est parallèle à l'axe d'insertion du serpentin.

8. Appareil selon la revendication 1, **caractérisé en ce que** la zone de support (11) comprend des dispositifs vibrants motorisés (29) pour provoquer la vibration des serpentins (32) présents dans cette zone et/ou qui sont insérés dans cette zone (11).

9. Appareil selon la revendication 1, **caractérisé en ce que** la zone de support (11) est prévue avec des supports (23, 25, 26, 27) pour supporter des déflecteurs radiaux (24) avec des trous, à travers lesquels on prévoit que l'extrémité avant du serpentin (32) passe progressivement pendant son mouvement d'insertion rotationnel.

10. Appareil selon la revendication 9, **caractérisé en ce que** les supports pour les déflecteurs (24) comprennent des éléments centraux en forme de Y (25) et des bras radiaux périphériques (26) pour au moins une première série de trois déflecteurs radiaux (24).

11. Appareil selon la revendication 10, **caractérisé en ce que** les supports pour les déflecteurs (24) comprennent également des bras radiaux périphériques supplémentaires (27) pour une deuxième série de trois déflecteurs radiaux agencés de manière alternée avec la première série de déflecteurs dans la direction circonférentielle autour de l'axe de rotation des serpentins dans la zone de support.

12. Procédé pour assembler, sur un appareil, des serpentins en spirale (32) pour échangeurs de chaleur agencés de manière axialement concentrique les uns au-dessus des autres, comprenant les étapes consistant à amener les serpentins (32) un à un vers une zone de support (11), en commençant avec le serpentin de plus petit diamètre, faire tourner de manière axiale à l'aide des moyens à rouleaux motorisés (13), le serpentin pendant son insertion dans la zone de support (11) pour un mouvement de vissage sur les serpentins en spirale (32) déjà insérés dans la zone de support (11), et dans lequel les serpentins (32) présents dans la zone de support (11) et/ou qui sont insérés de manière rotative dans la zone de support (11), sont amenés à vibrer en utilisant des moyens vibrants motorisés (29) pendant l'insertion d'un serpentin dans la zone de support.

13. Procédé selon la revendication 12, dans lequel les serpentins (32) sont supportés et alimentés avec leur axe horizontal.
